# EUROPEAN PATENT APPLICATION

(11) **EP 4 525 184 A1**
(43) Date of publication of application: **19.03.2025**
(21) Application number: 24189239.7
(22) Date of filing: 17.07.2024
(51) Int. Cl.: H01M 50/474, H01M 50/103, H01M 50/477, H01M 50/533, H01M 50/548, H01M 50/553, H01M 50/15, H01M 50/528

(54) **SECONDARY BATTERY**

(30) Priority: 14.09.2023 KR 20230122354
(71) Applicant: SAMSUNG SDI CO., LTD., Giheung-gu Yongin-si, Gyeonggi-do 17084 (KR)
(72) Inventor: HWANG, Yu Sik, 17084 Yongin-si (KR)
(74) Representative: Marks & Clerk LLP

(57) **Abstract**

A secondary battery includes a case, an electrode assembly in the case, and having a first electrode base material tab and a second electrode base material tab on respective ends thereof in a longitudinal direction, a first cap assembly provided with a first electrode terminal coupled to one end of the case, and electrically connected to the first electrode base material tab, a second cap assembly provided with a second electrode terminal coupled to another end of the case, and electrically connected to the second electrode base material tab, and a movement reduction member coupled to an interior of the case and insulated from the electrode assembly.

## Description

### BACKGROUND

### 1. Field

Embodiments relate to a secondary battery capable of reducing or minimizing movement of an electrode assembly.

### 2. Description of the Related Art

Recently, various attempts and improvements have been made to increase in capacity or improve performance of secondary batteries. In the case of a typical prismatic secondary battery for battery modules used in electric vehicles, etc., it has a structure in which positive and negative electrode terminals are provided at an upper portion of a rectangular parallelepiped shape. However, the top terminal type secondary battery has a complex internal structure for providing the positive and negative terminals at the upper portion thereof. To solve this limitation, a secondary battery in which a negative terminal is located at one end in the longitudinal direction, and a positive terminal is located at the other end in the longitudinal direction, has been developed. This type of secondary battery is also called a side terminal type secondary battery.

However, the side terminal type secondary battery is superior in terms of energy density compared to the top terminal type. However, if a length becomes longer, a limitation in which movement of the internal electrode assembly increases due to external vibration may occur. Therefore, it is desirable to solve the above limitation.

The above-described information disclosed in the technology that serves as the background of the present disclosure is only for improving understanding of the background of the present disclosure, and may include information that does not constitute the related art.

### SUMMARY

Aspects of some embodiments of the present disclosure provide a secondary battery capable of reducing or minimizing movement of an electrode assembly.

According to some embodiments, a secondary battery includes a case, an electrode assembly in the case, and having a first electrode base material tab and a second electrode base material tab on respective ends thereof in a longitudinal direction, a first cap assembly provided with a first electrode terminal coupled to one end of the case, and electrically connected to the first electrode base material tab, a second cap assembly provided with a second electrode terminal coupled to another end of the case, and electrically connected to the second electrode base material tab, and a movement reduction member coupled to an interior of the case and insulated from the electrode assembly.

The movement reduction member may have a plate shape, and may include a coupling part coupled to the case, and a contact part configured to support the electrode assembly.

The coupling part may be bent from one end of the contact part.

The coupling part may be bent at a right angle from the contact part.

The contact part may be coated with an insulating material, or may contact the insulating material by insert-injecting.

The case may include long side portions having opened ends, and short side portions having a length that is less than a length of the long side portions, wherein the movement reduction member is at a center of the long side portions in the longitudinal direction.

The case may include long side portions having opened ends, and short side portions having a length that is less than a length of the long side portions, wherein the movement reduction member is provided in plurality along the longitudinal direction of the long side portions.

The movement reduction members may have a same length.

The movement reduction members may have different respective lengths.

One of the movement reduction members having a relatively long length may be at a center of the long side portions in the longitudinal direction, wherein another one of the movement reduction members having a relatively short length is outside the movement reduction member having the relatively long length.

The movement reduction member having the relatively long length and the movement reduction member having the relatively short length may be alternately located.

The movement reduction member may be about 15% to about 25% of the length of the long side portions in a left and right direction based on a center of the long side portions in the longitudinal direction.

A pair of the movement reduction members may be respectively above and below the long side portions.

The contact parts of the movement reduction members may be parallel to the short side portions.

The contact parts of the movement reduction members might not contact each other.

According to some embodiments, a secondary battery includes a case having a hexahedral shape having opened ends in a longitudinal direction, and having first and second surfaces as long side portions, and third and fourth surfaces connecting the first surface to the second surface, an electrode assembly in the case and having a first electrode base material tab and a second electrode base material tab on respective ends in the longitudinal direction, a first cap assembly including a first electrode terminal coupled to one end of the case, and electrically connected to the first electrode base material tab, a second cap assembly provided with a second electrode terminal coupled to another end of the case, and electrically connected to the second electrode base material tab, and a movement reduction member coupled to an interior of the first surface or the second surface, and insulated from the electrode assembly.

The movement reduction member may have a plate shape, and may include a coupling part welded to the case, and a contact part configured to support the electrode assembly.

The coupling part may be bent from one end of the contact part.

The coupling part may be bent at a right angle from the contact part.

The contact part may be coated with an insulating material, or contacts the insulating material by insert-injecting.

The movement reduction member may be at a longitudinal center of the first surface or the second surface.

The movement reduction member may be provided as a pair of movement reduction members respectively above and below the first surface and the second surface.

The contact part of one of the pair of the movement reduction members above the first surface and the second surface may be parallel to the third surface, and wherein the contact part of the other of the pair of the movement reduction members below the first surface and the second surface is parallel to the fourth surface.

The movement reduction member may be about 15% to about 25% of a length of the long side portions in a left and right direction based on the longitudinal center.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:
Fig. 1 illustrates a perspective view of a secondary battery according to embodiments;
Fig. 2 illustrates an exploded perspective view of the secondary battery of Fig. 1;
Fig. 3 illustrates a perspective view of a terminal connection structure of the secondary battery of Fig. 1;
Fig. 4 illustrates a schematic view of repulsion offset force if external force is generated in the secondary battery of Fig. 1;
Fig. 5 illustrates a schematic view of an installed state of a movement reduction member in a direction A of Fig. 1;
Fig. 6 illustrates a schematic view of an installed state of the movement reduction member in a direction B of Fig. 1;
Fig. 7 illustrates a schematic view of a mounted state of the movement reduction member and an electrode assembly in Figs. 5 and 6;
Fig. 8 illustrates a side view of the movement reduction member according to embodiments; and
Fig. 9 illustrates a front view of the movement reduction member according to embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) Referring to the figures. It will be understood that the spatially relative terms are intended to encompass different orientations of the device in use or in operation, in addition to the orientation depicted in the figures. For example, if the device in the figures is turned over, elements described as "below," "beneath," or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

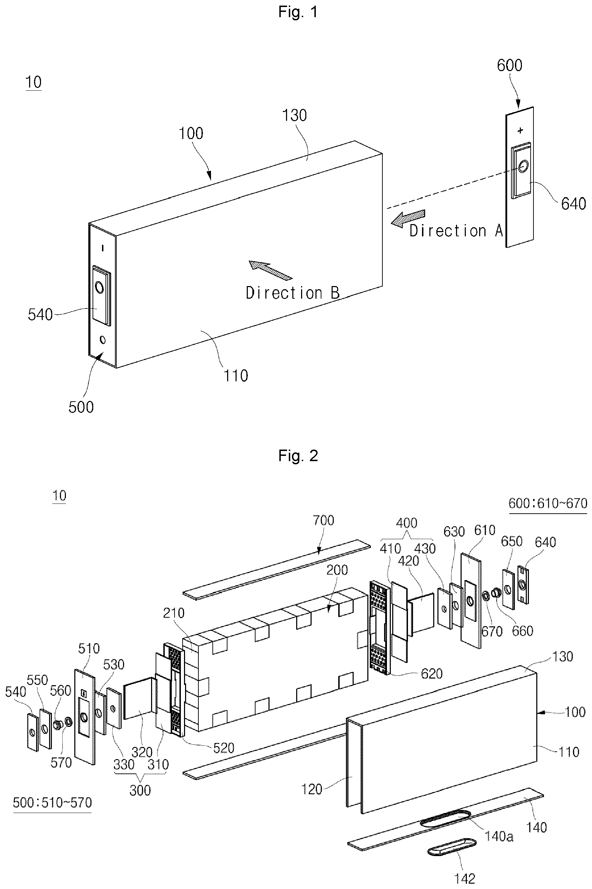

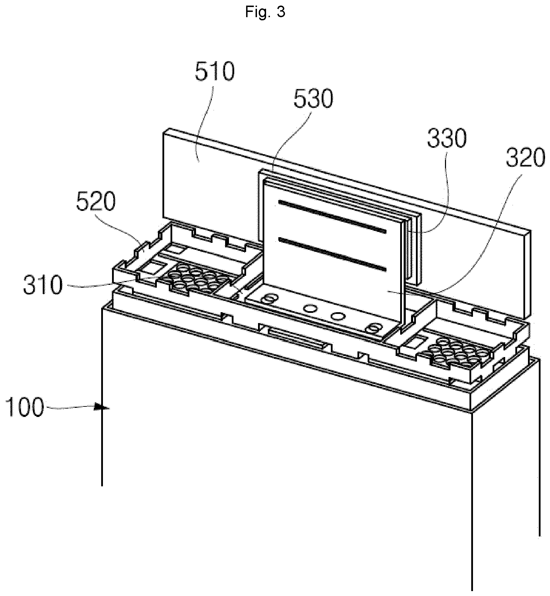

Fig. 1 illustrates a perspective view of a secondary battery according to embodiments. Fig. 2 illustrates an exploded perspective view of the secondary battery of Fig. 1. Fig. 3 illustrates a perspective view of a terminal connection structure of the secondary battery of Fig. 1.

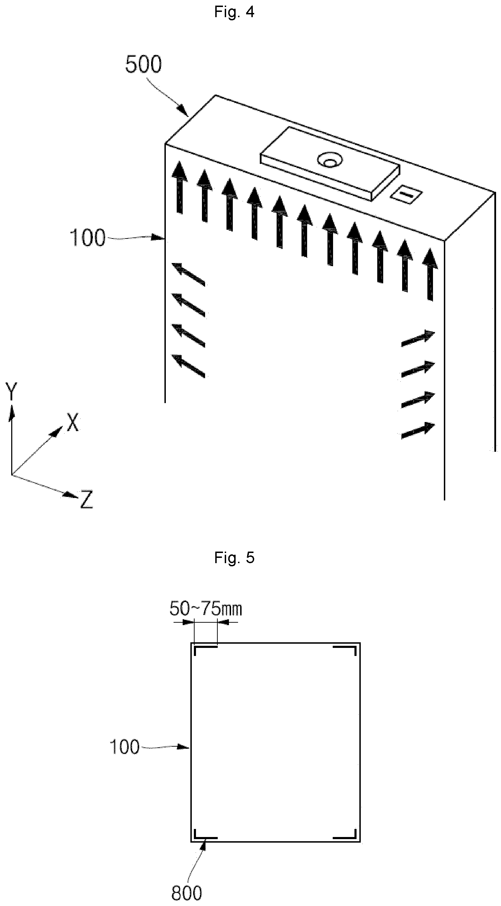

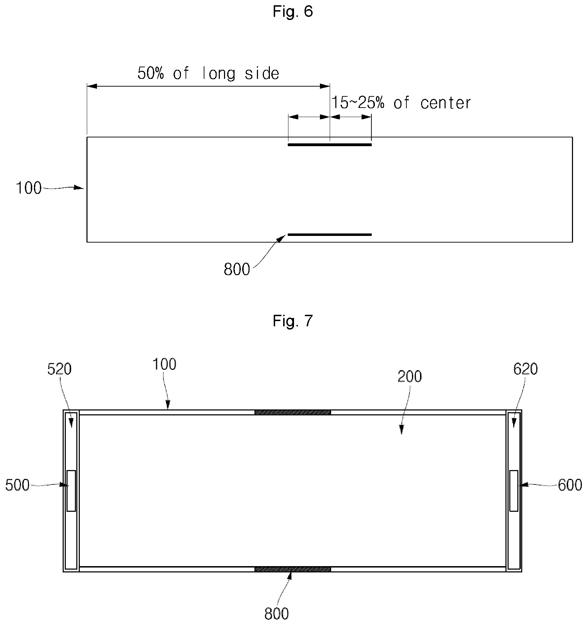

Referring to Figs. 1 and 2, a secondary battery 10 according to one or more embodiments of the present disclosure may include a case 100, an electrode assembly 200, a first current collector 300, and a second current collector 400, which are accommodated inside the case 100, and a first cap assembly 500 and a second cap assembly 600, which are coupled to the case 100. A pair of retainers 700 may be inserted between the case 100 and the electrode assembly 200. In some embodiments, a movement reduction member (e.g., a movement prevention member, to be described later with reference to Figs. 5 and 6) may be provided inside the case 100.

The case 100 may have a rectangular parallelepiped shape with both ends opened in a longitudinal direction. Except for both opened ends of the case 100, the case 100 may include a first surface 110 and a second surface 120, which are the relatively widest surfaces, and may include a third surface 130 and a fourth surface 140, which connect the first surface 110 to the second surface 120. A vent hole 140a to which a vent 142 is coupled may be defined in one of the third surface 130 or the fourth surface 140. In Fig. 2, the fourth surface 140, which is a bottom surface, is illustrated as having the vent hole 140a. The fourth surface 140 may be manufactured separately and welded to the first surface 110 and the second surface 120. Each of the first surface 110 and the second surface 120 may have a relatively larger area than each of the third surface 130 and the fourth surface 140. In some embodiments, the first surface 110 and the second surface 120 may be defined as long side portions. The third surface 130 and the fourth surface 140 may be defined as short side portions.

The case 100 may be made of steel, a steel alloy, aluminum, an aluminum alloy, or an equivalent thereof, but the material thereof is not limited thereto. The electrode assembly 200, the first current collector 300, and the second current collector 400 may be accommodated together with an electrolyte inside the case 100. A first cap assembly 500 and a second cap assembly 600 may be respectively located at both the opened ends of the case 100.

Referring to Fig. 2, the electrode assembly 200 may have a rectangular parallelepiped shape corresponding to the case 100. The electrode assembly 200 may have a shape in which a first electrode plate, a second electrode plate, and a separator interposed between the first and second electrode plates are wound or stacked. In some embodiments, the first electrode plate may be a positive electrode plate, and the second electrode plate may be a negative electrode plate, and vice versa.

In the first electrode plate, a positive active material layer may be located on at least one surface of aluminum (Al) foil by coating and the like. In some embodiments, the positive electrode active material layer may be transition metal oxide (LiCoO₂, LiNiO₂, LiMn₂O₄, etc.). A first electrode non-coating portion to which the positive electrode active material layer is not located may be provided on the first electrode plate. A plurality of first electrode base material tabs 210 may be provided by cutting the first electrode non-coating portion into a corresponding shape by notching or the like. The first electrode base material tab 210 may be located on one end of the electrode assembly 200. In some embodiments, the first electrode base material tab 210 may be divided into two portions. The first electrode base material tab 210 may be electrically connected to the first current collector 300.

In the second electrode plate, a negative electrode active material layer may be located on at least one surface of copper (Cu) or nickel foil by coating and the like. In some embodiments, the negative electrode active material layer may be made of graphite, carbon, etc. A second electrode non-coating portion on which the negative electrode active material layer is not located may be provided on the second electrode plate. In one or more embodiments, a plurality of second electrode base material tabs may be provided by cutting the second electrode non-coating portion into a certain shape by notching or the like. The second electrode base material tab may be located on the other end of the electrode assembly 200. In some embodiments, the second electrode base material tab may be divided into two portions. The second electrode base material tab may be electrically connected to the second current collector 400.

The separator may be made of polyethylene (PE) or polypropylene (PP), but the present disclosure is not limited thereto. The separator may reduce or prevent the likelihood of a short circuit from occurring between the first electrode plate and the second electrode plate and allow lithium ions to move only.

Referring to Figs. 2 and 3, the first current collector 300 may include a first current collector plate 310, a first auxiliary tab 320, and a first internal terminal 330. The first current collector plate 310, the first auxiliary tab 320, and the first internal terminal 330 may be made of the same material as the first electrode base material tab 210.

The first current collector plate 310 may be provided as a rectangular thin plate, and may approximately correspond to a shape of one end of the electrode assembly 200. A size of the first current collector plate 310 may be somewhat less than that of one end of the electrode assembly 200. The first current collector plate 310 may be electrically connected to the first electrode base material tab 210 of the electrode assembly 200. Both ends of the first current collector plate 310 may be respectively welded to the first electrode base material tabs 210 located at the two portions. A central area of the first current collector plate 310 may protrude convexly toward the first cap assembly 500. The first auxiliary tab 320 may be welded to the convexly protruding portion of the first current collector plate 310.

The first auxiliary tab 320 may be provided as a rectangular thin plate, and one end thereof may be folded and welded to one side of the convex portion of the first current collector plate 310. The other end of the first auxiliary tab 320 may be welded to the first internal terminal 330 (see Fig. 3). The first auxiliary tab 320 may be bent if the first cap assembly 500 is coupled to the case 100.

The first internal terminal 330 may be provided as a rectangular plate and may approximately correspond in size and shape to the convex portion of the first current collector plate 310. In some embodiments, the first internal terminal 330 may have substantially the same size and shape as each of the first external terminal 540 and the first internal insulator 530, which will be described later. A circular hole may be defined to pass through a center of the first internal terminal 330. The first internal terminal 330 may be thicker than the first auxiliary tab 320.

As described above, because all the first electrode base material tab 210, the first current collector plate 310, and the first internal terminal 330 may be made of the same material, and may be welded together, the first electrode base material tab 210, the first current collector plate 310, and the first internal terminal 330 may be electrically connected to each other. A structure of the first current collector 300 described above may be equally applied to the second current collector 400. Therefore, a repeated detailed description of the second current collector 400 will be omitted ("first" is added to the names of all components of the first current collector to distinguish them from the components of the second current collector).

The first cap assembly 500 may include a first cap plate 510 coupled to the case 100, a first insulating member 520 for insulation from the electrode assembly 200, a first internal insulator 530 for insulation from the first current collector 300, a first external terminal 540 for electrical connection to the outside, a first external insulator 550 for insulation from the first external terminal 540, a first terminal pin 560, and a first gasket 570.

The first cap plate 510 may be provided as a rectangular plate, and a recessed groove having a rectangular shape may be defined in a center of a plate surface facing the outside, and also in a center of a plate surface facing the inside. A hole for inserting the first terminal pin 560 may be defined to pass through the center of the groove. The first insulating member 520 may be located between the first cap plate 510 and one end of the electrode assembly 200.

The first insulating member 520 may be made of an insulating material, and may have a substantially rectangular shape. A rectangular opening may be defined in a center of the first insulating member 520. A non-opened area may be located between both ends of the first current collector plate 310 and the first cap plate 510 to insulate the first current collector plate 310 from the first cap plate 510. The first auxiliary tab 320 welded to the convex portion of the first current collector plate 310 may be exposed toward the first cap plate 510 through the opening of the first insulating member 520. The first insulating member 520 may be referred to as a side retainer, because the first insulating member 520 may also serve to reduce or prevent movement of the electrode assembly 200 (e.g., movement in a Y-axis direction with reference to Fig. 4, which will be described later).

The first internal insulator 530 may be located between the first internal terminal 330 and the first cap plate 510. The first internal insulator 530 may be provided as a rectangular insulating material, and may be the same size or larger than the first internal terminal 330. The first internal insulator 530 may be seated in an inner rectangular groove of the first cap plate 510. A hole may be defined to pass through a center of the first internal insulator 530.

The first external terminal 540 may have a rectangular plate shape, and a hole may be defined to pass through a center of the first external terminal 540. The first external terminal 540 may be physically coupled to the first terminal pin 560 so as to be electrically connected. The first external insulator 550 may be inserted between the first external terminal 540 and the first cap plate 510.

The first external insulator 550 may be provided as a rectangular insulating material to insulate the first external terminal 540 from the first cap plate 510. The first external insulator 550 may be seated in an outer rectangular groove of the first cap plate 510. A hole may be defined to pass through a center of the first external insulator 550.

The first terminal pin 560 may serve to electrically connect the first external terminal 540 to the first internal terminal 330. In some embodiments, the first terminal pin 560 may be inserted to sequentially pass through the first external terminal 540, the first external insulator 550, the first cap plate 510, the first internal insulator 530, and the first internal terminal 330. An outer end of the first terminal pin 560 may be coupled to the first external terminal 540, and an inner end of the first terminal pin 560 may be coupled to the first internal terminal 330. Because the first internal terminal 330 is electrically connected to the first electrode base material tab 210, the first external terminal 540 may be a positive electrode terminal.

The first gasket 570 may be interposed between the first cap plate 510 and the first terminal pin 560, and may insulate the first cap plate 510 from the first terminal pin 560.

The above-described first cap assembly 500 may have the same structure as the second cap assembly 600 (a repeated detailed description of the second cap assembly 600 will be omitted). "First" may be added to the names of all the components of the first cap assembly 500 to distinguish them from the components of the second cap assembly 600. In some embodiments, the second external terminal 640 of the second cap assembly 600 may be a negative electrode terminal. In one or more embodiments, if the positions of the positive electrode and the negative electrode are reversed, the first external terminal may be the negative electrode, and the second external terminal may be the positive electrode.

The electrode assembly 200 having the above-described structure may be connected to the first current collector 300 and the second current collector 400 and then inserted into the case 100. In some embodiments, the retainer 700 may be inserted between each of the third and fourth surfaces 130 and 140 of the case 100 and the electrode assembly 200. The retainer 700 may have a width that is less than that of the long side portions of the electrode assembly 200 facing the third surface 130 and the fourth surface 140 of the case 100. In some embodiments, the length may also be less than that of the long side portions of the electrode assembly 200. In one or more embodiments, the retainer 700 may have an uneven shape or a wave type to absorb external force.

In some embodiments, a plurality of movement reduction members 800 may be provided between the first and second surfaces 110 and 120 of the case 100 and the electrode assembly 200. Hereinafter, the movement reduction member 800 will be described in detail.

Fig. 4 illustrates a schematic view of repulsion offset force if external force is generated in the secondary battery of Fig. 1.

Referring to 4, external force may be applied in X-, Y-, and Z-axis directions while the secondary battery 10 is in use. If the external force is applied in each of the directions, a direction of resulting repulsive canceling force is illustrated in Fig. 4. Because the electrode assembly is coupled to the current collector plate and the cap assembly, and is provided with a side retainer 700, the repelling offset force in the Y- and Z-axis directions may be relatively larger than that in the X-axis direction. In one or more embodiments, because the electrode assembly does not have a structure that is coupled or fixed with respect to the X-axis direction (e.g., direction B in Fig. 1, which may be a direction toward the first surface 110 and the second surface 120), if external force is applied to the corresponding direction, the electrode assembly may move. If the electrode assembly moves, damage, such as tearing of the auxiliary tab connected to the internal terminal of the cap assembly, may occur. In some embodiments, the electrode assembly may have a structure that is inevitably vulnerable to the external force applied in the X-axis direction. Therefore, the present disclosure proposes a retainer that is capable of reinforcing the repulsive offset force against the external force applied in the X-axis direction.

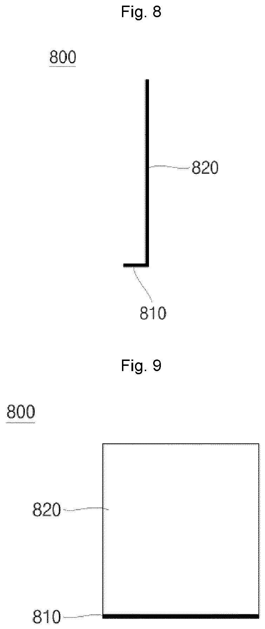

Fig. 5 illustrates a schematic view of an installed state of the movement reduction member in a direction A of Fig. 1. Fig. 6 illustrates a schematic view of an installed state of the movement reduction member in a direction B of Fig. 1. Fig. 7 illustrates a schematic view of a mounted state of the movement reduction member and an electrode assembly in Figs. 5 and 6. Fig. 8 illustrates a side view of the movement reduction member according to embodiments. Fig. 9 illustrates a front view of the movement reduction member according to embodiments.

Referring to Figs. 5 and 6, in a movement reduction member 800 according to one or more embodiments of the present disclosure, an electrode assembly 200 may not move in a direction of the first surface 110 and the second surface 120 of the case 100 (X-axis direction). Because the movement reduction member 800 has one end that is bent at a right angle, there may be an aspect of an increase in repulsive offsetting force with respect to the X-axis direction.

Fig. 5 illustrates a shape of the movement reduction member 800 if the case 100 is viewed in the direction A of Fig. 1. The movement reduction member 800 may have a structure that is bent at a right angle based on the direction A. Fig. 6 illustrates a shape of the movement reduction member 800 if the case 100 is viewed in the direction B of Fig. 1. Fig. 7 illustrates a shape in which the movement reduction member 800 is mounted if the case 100 is viewed in the direction B. The movement reduction member 800 may have a straight shape based on the direction B. In the direction B, because only a thickness of a bent end of the movement reduction member 800 is visible, the movement reduction member 800 may appear as the straight shape.

To be described in more detail with reference to Figs. 8 and 9, the movement reduction member 800 may be provided as a thin rectangular plate, and one end of the movement reduction member 800 may be bent at a right angle. An area of the bent end may be referred to as the coupling part 810. A portion excluding the coupling part 810 may be in contact with the electrode assembly 200, and may be referred to as a contact part 820. If the movement reduction member 800 and the case 100 are coupled, the movement reduction members 800 may be located so that coupling parts 810 face each other. In one or more embodiments, Referring to Fig. 5, all contact parts 820 may be located parallel to the third surface 130 and the fourth surface 140. The contact part 820 of the movement reduction member 800 located at an upper side of the first surface 110 and the second surface 120 may be located parallel to the third surface 130, which is a top surface. In one or more embodiments, the contact part 820 of the movement reduction member 800 located at a lower side of the first surface 110, and the second surface 120 may be located parallel to the fourth surface 140, which is a bottom surface. Because the movement reduction member 800 is in direct contact with the electrode assembly 200, the surface may be insulated to reduce or prevent the likelihood of a short circuit occurring. The movement reduction member 800 may be made of an insulating material, and may be surface treated with a material that does not react with an electrolyte so as not to corrode. For example, after cutting a base material, such as aluminum, the movement reduction member 800 may be manufactured by bending one end at a right angle, and by applying or insert-injecting the insulating material. In one or more embodiments, excluding the coupling part 810 welded to the case 100, only the contact part 820 may be coated or insert-injected with the insulating material. In some embodiments, the thickness of the movement reduction member 800 may be about 1 mm. As the thickness of the movement reduction member 800 increases, an aspect of reducing or preventing movement of the electrode assembly 200 may increase, but, because a capacity of the secondary battery 10 decreases, the thickness of the movement reduction member 800 may be about 1 mm to about 3 mm. The coupling part 810 may be a portion fixed to the case 100, and may be provided by bending only the minimum area that is capable of being welded. In some embodiments, the area of the coupling part 810 may be about 10% or less of the total area of the movement reduction member 800, but is not limited thereto. The movement reduction member 800 manufactured in this manner may be fixed to the case 100 by cutting the base material (aluminum) of the case 100, and by then welding the coupling part 810 to the case 100.

Referring to Fig. 5, the movement reduction member 800 may be located on the first surface 110 and the second surface 120, which are adjacent to the third surface 130 and the fourth surface 140. In some embodiments, the movement reduction member 800 may be located so as not to be in contact with the third surface 130 and the fourth surface 140. In some embodiments, a pair of movement reduction members 800 may be located above and below the first surface 110, and a pair of movement reduction members 800 may be located above and below the second surface 120. A length of the contact part 820 of the movement reduction member 800 (in Fig. 8, a length of the contact part in a vertical direction) may be about 50 mm to about 75 mm.

Referring to Fig. 6, the movement reduction member 800 may be provided to have a certain length in a left and right direction with respect to the longitudinal center (hereinafter referred to as a center point) of the case 100. In some embodiments, the movement reduction member 800 may be provided to have a length of about 15% to about 25% of a length of the case 100 (horizontal length in Fig. 9) in the left and right direction with respect to the above-mentioned center point. If the longitudinal length of the case 100 is about 100 mm, the movement reduction member 800 may have a length ranging from about 15 mm to about 25 mm in the left and right direction with respect to the center point. In some embodiments, a horizontal length of the movement reduction member 800 in Fig. 9 may be about 30 mm to about 50 mm.

In Fig. 5, the contact part 820 of each movement reduction member 800 may be in contact with the electrode assembly 200. In some embodiments, if the coupling part 810 is coupled to the first surface 110 and the second surface 120 of the case 100, each movement reduction member 800 may be installed so as not to be in contact with the third surface 130 and the fourth surface 140. If the electrode assembly 200 is mounted, the electrode assembly 200 may also be maintained in a state of being spaced apart from the third surface 130 and the fourth surface 140 by the movement reduction member 800. Therefore, even if the electrode assembly 200 receives external force in the vertical direction (Z-axis direction) in Fig. 5, the movement may be reduced or minimized by the contact part 820. Although the movement reduction member 800 has a thin thickness (about 1 mm), if the coupling part 810 is welded to the first surface 110 and the second surface 120 of the case 100, the coupling part 810 may be closer to the electrode assembly 200 than the first surface 110 and the second surface 120. In some embodiments, the movement reduction member 800 may be in close contact with the electrode assembly 200 by the thickness of the coupling part 810. Therefore, even if the electrode assembly 200 receives the external force in the direction of the first and second surfaces 110 and 120 (Y-axis direction), the movement may be reduced or minimized by the coupling part 810.

As described above, one movement reduction member 800 may be located at the longitudinal center of the first surface 110 and the second surface 120, which are the long side portions. In one or more embodiments, the plurality of movement reduction members may be located along the longitudinal direction of the long side portion. If the plurality of movement reduction members are provided, lengths of the movement reduction member may be the same, or may be different from each other. If the movement reduction members having the different lengths are provided, the longest member may be located at the center of the long side portions in the longitudinal direction, and the shorter member may be placed outside the longest member. In some embodiments, the long and short movement reduction members may be alternately located with respect to each other. The movement reduction member may have a length at which the movement reduction member is not in contact with the facing movement reduction member (the contact parts are not in contact with each other).

Due to the above-described structure, the electrode assembly of the present disclosure may be reduced or minimized in movement even if the external force is applied from the Y-axis direction and the Z-axis direction. Therefore, the likelihood of rupture of the tab, which may be caused by the movement of the electrode assembly, may be reduced or prevented to reduce or prevent damage potentially leading to the internal short-circuit from occurring.

According to the embodiments of the present disclosure, the retainer may be provided at the portion that receives a relatively high degree of external force to reduce or minimize the movement of the electrode assembly. Therefore, the likelihood of the rupture of the tab, which is caused by the movement of the electrode assembly, may be reduced or prevented to reduce or prevent damage potentially leading to the internal short-circuit from occurring.

The above is merely one or more embodiments, and the present disclosure is not limited to the foregoing, and also it will be understood by those of ordinary skill in the art that various changes in form and details may be made therein without departing from the scope of the present disclosure as defined by the following claims, with functional equivalents thereof to be included therein.

## Claims

1. A secondary battery comprising:
a case;
an electrode assembly in the case, and having a first electrode base material tab and a second electrode base material tab on respective ends thereof in a longitudinal direction;
a first cap assembly provided with a first electrode terminal coupled to one end of the case, and electrically connected to the first electrode base material tab;
a second cap assembly provided with a second electrode terminal coupled to another end of the case, and electrically connected to the second electrode base material tab; and
a movement reduction member coupled to an interior of the case and insulated from the electrode assembly.

2. The secondary battery as claimed in claim 1, wherein the movement reduction member has a plate shape, and comprises a coupling part coupled to the case, and a contact part configured to support the electrode assembly.

3. The secondary battery as claimed in claim 2, wherein the coupling part is bent from one end of the contact part, and optionally
the coupling part is bent at a right angle from the contact part.

4. The secondary battery as claimed in claim 2 or 3, wherein the contact part is coated with an insulating material, or contacts the insulating material by insert-injecting.

5. The secondary battery as claimed in any preceding claim, wherein the case comprises long side portions having opened ends, and short side portions having a length that is less than a length of the long side portions, and
wherein the movement reduction member is at a center of the long side portions in the longitudinal direction.

6. The secondary battery as claimed in any one of claims 1 to 4, wherein the case comprises long side portions having opened ends, and short side portions having a length that is less than a length of the long side portions, and
wherein the movement reduction member is provided as a plurality of movement reduction members along the longitudinal direction of the long side portions.

7. The secondary battery as claimed in claim 6, wherein the movement reduction members have a same length.

8. The secondary battery as claimed in claim 6, wherein the movement reduction members have different respective lengths, and optionally
one of the movement reduction members having a relatively long length is at a center of the long side portions in the longitudinal direction, and wherein another one of the movement reduction members having a relatively short length is outside the movement reduction member having the relatively long length, and optionally
the movement reduction member having the relatively long length and the movement reduction member having the relatively short length are alternately located.

9. The secondary battery as claimed in any one of claims 6 to 8, wherein the movement reduction member is about 15% to about 25% of the length of the long side portions in a left and right direction based on a center of the long side portions in the longitudinal direction.

10. The secondary battery as claimed in claim 5, wherein a pair of the movement reduction members are respectively above and below the long side portions.

11. The secondary battery as claimed in claim 10 when dependent on claim 5 when dependent on claim 2 or any claim dependent on claim 2, wherein the contact parts of the movement reduction members are parallel to the short side portions, and/or
the contact parts of the movement reduction members do not contact each other.

12. A secondary battery as claimed in any one of claims 1 to 4, wherein
the case has a hexahedral shape having opened ends in a longitudinal direction, and has first and second surfaces as long side portions, and third and fourth surfaces connecting the first surface to the second surface; and
the movement reduction member is coupled to an interior of the first surface or the second surface.

13. The secondary battery as claimed in claim 12, wherein the movement reduction member has a plate shape, and comprises a coupling part welded to the case, and a contact part configured to support the electrode assembly, and optionally
the coupling part is bent from one end of the contact part, and optionally
the coupling part is bent at a right angle from the contact part.

14. The secondary battery as claimed in claim 13, wherein the movement reduction member is at a longitudinal center of the first surface or the second surface.

15. The secondary battery as claimed in claim 13 or 14, wherein the movement reduction member is provided as a pair of movement reduction members respectively above and below the first surface and the second surface, and optionally
the contact part of one of the pair of the movement reduction members above the first surface and the second surface is parallel to the third surface, and wherein the contact part of the other of the pair of the movement reduction members below the first surface and the second surface is parallel to the fourth surface, and/or
the movement reduction member is about 15% to about 25% of a length of the long side portions in a left and right direction based on the longitudinal center.
